# EUROPÄISCHE PATENTANMELDUNG

(11) **EP 0 973 053 A2**
(43) Veröffentlichungstag der Anmeldung: **19.01.2000**
(21) Anmeldenummer: 99111514.8
(22) Anmeldetag: 14.06.1999
(51) Int. Cl.: G02B 7/28

(54) **Vorrichtung zum Verstellen der Fokuslage einer optoelektronischen Vorrichtung**

(30) Priorität: 19.06.1998 DE 19827485
(71) Anmelder: Sick AG, 79183 Waldkirch, Breisgau (DE)
(72) Erfinder: Anselment, Christoph, 79183 Waldkirch (DE); Paske, Ralf, 79183 Waldkirch (DE); Hippenmeyer, Heinrich, 79348 Freiamt (DE)
(74) Vertreter: Manitz, Finsterwald & Partner

(57) **Zusammenfassung**

Es wird eine Vorrichtung zum Verstellen der Fokuslage einer ein Licht aussendendes Sendeelement und eine Linse zum Fokussieren des von dem Sendeelement ausgesandten Lichts umfassenden optoelektronischen Vorrichtung beschrieben. Die Vorrichtung umfaßt einen Schwenkhebel zur Aufnahme des Sendeelements oder der Linse, der über ein Stellelement zum Verstellen des Abstandes zwischen dem Sendeelement und der Linse und damit zum Einstellen der Fokuslage um ein Drehgelenk verschwenkbar ist. Der Schwenkhebel ist als doppelarmiger Schwenkhebel ausgebildet, wobei der eine Arm des Schwenkhebels zur Aufnahme der Linse oder des Sendeelements ausgebildet ist und das Stellelement an einem Angriffsabschnitt des auf der anderen Seite des Drehgelenks liegenden, anderen Arm des Schwenkhebels angreift. Weiterhin wird eine Variante, bei der sich das Stellelement entlang der Längsausdehnung des Schwenkhebels erstreckt sowie eine optoelektronische Vorrichtung mit einer solchen Verstellvorrichtung beschrieben.

## Beschreibung

Die vorliegende Erfindung betrifft eine Vorrichtung zum Verstellen der Fokuslage einer ein Licht aussendendes Sendeelement und eine Linse zum Fokussieren des von dem Sendeelement ausgesandten Licht umfassenden optoelektronischen Vorrichtung. Weiterhin ist die Erfindung auf eine optoelektronische Vorrichtung mit einer solchen Vorrichtung zum Verstellen der Fokuslage gerichtet.

Vorrichtungen dieser Art werden verwendet, um beispielsweise die Fokuslage von Lichtschranken, Lichttastern, Strichcodelesern oder sonstigen optoelektronischen Vorrichtungen einzustellen. Bei bekannten Vorrichtungen ist dabei ein Schwenkhebel vorgesehen, der um eine an einem Ende des Schwenkhebels vorgesehene Schwenkachse schwenkbar ist. Während die Linse im mittleren Bereich des Schwenkhebels zwischen dessen beiden freien Enden angeordnet ist, greift an dem der Schwenkachse gegenüberliegenden Ende des Schwenkhebels ein Stellelement an, über das der Schwenkhebel um die Schwenkachse verstellbar ist. Auf diese Weise ist der Abstand zwischen der Linse und dem innerhalb der optoelektronischen Vorrichtung vorgesehenen Sendeelement und damit die Fokuslage der Vorrichtung einstellbar.

Nachteilig an den bekannten Vorrichtungen ist es, daß das Stellelement üblicherweise quer zu der Längserstreckung des Schwenkhebels angeordnet ist und sich somit seitlich relativ weit über den Schwenkhebel hinaus erstreckt. Dadurch sind die Abmessungen einer solchen Verstellvorrichtung und damit auch einer mit einer solchen Versteilvorrichtung versehenen optoelektronischen Vorrichtung relativ groß, was bei dem heutigen Trend zur zunehmenden Miniaturisierung in praktisch allen technischen Bereichen nachteilig ist.

Es ist eine Aufgabe der Erfindung, eine Verstellvorrichtung der eingangs genannten Art sowie eine optoelektronische Vorrichtung mit einer solchen Verstellvorrichtung anzugeben, die bei gleicher technischer Funktionalität eine verringerte Baugröße als bekannte Verstellvorrichtungen bzw. optoelektronische Vorrichtungen besitzen.

Diese Aufgabe wird erfindungsgemäß gelöst durch eine Vorrichtung zum Verstellen der Fokuslage einer ein Licht aussendendes Sendeelement und eine Linse zum Fokussieren des von dem Sendeelement ausgesandten Lichts umfassenden optoelektronischen Vorrichtung mit einem Schwenkhebel zur Aufnahme des Sendeelements oder der Linse, wobei der Schwenkhebel als doppelarmiger Schwenkhebel ausgebildet und über ein Stellelement zum Verstellen des Abstandes zwischen dem Sendeelement und der Linse und damit zum Einstellen der Fokuslage um ein Drehgelenk verschwenkbar ist, der eine Arm des Schwenkhebels zur Aufnahme der Linse oder des Sendeelements ausgebildet ist und das Stellelement an einem Angriffsabschnitt des auf der anderen Seite des Drehgelenks liegenden, anderen Arm des Schwenkhebels angreift.

Weiterhin wird die gestellte Aufgabe gelöst durch eine Vorrichtung zum Verstellen der Fokuslage einer ein Licht aussendendes Sendeelement und eine Linse zum Fokussieren des von dem Sendeelement ausgesandten Lichts umfassenden optoelektronischen Vorrichtung mit einem Schwenkhebel zur Aufnahme des Sendeelements oder der Linse, wobei der Schwenkhebel über ein Stellelement zum Verstellen des Abstandes zwischen dem Sendeelement und der Linse und damit zum Einstellen der Fokuslage um ein Drehgelenk verschwenkbar ist und sich das Stellelement entlang der Längsausdehnung des Schwenkhebels erstreckt.

Durch die Verwendung eines doppelarmigen Schwenkhebels in Art einer Wippe, bei der an einem Arm die Linse oder das Sendeelement angeordnet werden kann und das Stellelement an dem anderen Arm des Schwenkhebels angreift bzw. durch die Anordnung des Stellelements entlang der Längsausdehnung des Schwenkhebels, wird eine platzoptimierte Anordnung geschaffen. Insbesondere kann dadurch, daß die Linse bzw. der Schwenkhebel nicht im Mittelbereich des Schwenkhebels angeordnet ist, ein Teil des Stellelements zwischen dem Schwenkhebel und dem das Sendeelement bzw. die Linse tragenden Teil der optoelektronischen Vorrichtung angeordnet werden, da der frei zu haltende Übertragungsbereich zwischen Linse und Sendeelement dadurch nicht beeinträchtigt wird, wodurch eine verringerte Baugröße erreicht wird. Durch die Anordnung des Stellelements entlang der Längsausdehnung des Schwenkhebels wird erreicht, daß Schwenkhebel und Stellelement sehr kompakt angeordnet sind, so daß das Stellelement insbesondere nicht seitlich über den Schwenkhebel hinausragt.

Weiterhin kann durch die Ausbildung als doppelarmiger Schwenkhebel ein ausgewogenes Verhältnis der beiden Hebelarme erreicht werden, so daß zum einen ein ausreichend großer Verstellweg für die Fokuslage erreichbar ist und zum anderen der von dem Stellelement beaufschlagte Hebelarm mit ausreichender Genauigkeit eingestellt werden kann.

Nach einer vorteilhaften Ausführungsform der Erfindung erstreckt sich das Stellelement von dem an dem einen Arm des Schwenkhebels angeordneten Angriffspunkt in Richtung zu dem anderen Arm des Schwenkhebels hin. Durch diese Ausführungsform wird erreicht, daß sich das Stellelement praktisch vollständig entlang des Schwenkhebels erstreckt, so daß eine weitere Verringerung der Abmessungen der erfindungsgemäßen Verstellvorrichtung senkrecht zur Längserstreckung des Schwenkhebels erreicht wird.

Ist nach einer vorteilhaften Ausführungsform das Stellelement als insbesondere elektrischer Motor ausgebildet, so kann bevorzugt die Drehachse des Motors im wesentlichen parallel zur Längserstreckung des Schwenkhebels verlaufen, um eine platzoptimierte Anordnung zu erhalten.

Um eine noch weitere Verringerung der Baugröße der erfindungsgemäßen Vorrichtung zu ermöglichen, kann der Schwenkhebel eine Ausnehmung, insbesondere eine Durchbrechung aufweisen, wobei sich ein Teil des Stellelements in die Ausnehmung hinein erstreckt. Dadurch kann auch eine Reduzierung der Abmessungen der erfindungsgemäßen Vorrichtung in der Bewegungsebene des Schwenkhebels erreicht werden, da der Schwenkhebel und das Stellelement, beispielsweise das Gehäuse des Stellmotors, ineinander eingreifen können.

Nach einer weiteren vorteilhaften Ausführungsform der Erfindung greift das Stellelement über einen Exzenter an dem Schwenkhebel an. Durch diese Ausbildung ist eine sehr feine Justierung des Schwenkliebeis möglich. Dabei kann der Exzenter beispielsweise an der Drehachse eines Stellmotors vorgesehen oder manuell von außen betätigbar sein.

Das Drehgelenk ist bevorzugt als Blattfederdrehgelenk ausgebildet, da durch eine solche Ausbildung die Kosten für eine entsprechende Vorrichtung reduziert werden können. Grundsätzlich ist es jedoch möglich, daß beliebige, übliche Drehgelenkverbindungen eingesetzt werden.

Nach einer weiteren vorteilhaften Ausführungsform der Erfindung ist das Drehgelenk an einem Basisteil vorgesehen, wobei an dem Schwenkhebel Positionierelemente zum eindeutigen Festlegen des Schwenkhebels bezüglich des Basisteils in zumindest zwei Freiheitsgraden ausgebildet sind. Das üblicherweise an oder in einer optoelektronischen Vorrichtung befestigte oder einstückig mit dieser ausgebildete Basisteil bildet somit den Anlenkpunkt für die Schwenkbewegung des Schwenkhebels. Durch die spielfreie Positionierung des Schwenkhebels bezüglich des Drehgelenks durch die Positionierelemente ist eine eindeutige Zuordnung von Linse und Sendeelement ohne Justage möglich. Nach Positionieren des Schwenkhebels durch Festlegen der Positionierelemente ist somit der Schwenkhebel nur noch um das Drehgelenk verschwenkbar und daher die Linse und das Sendeelement nur noch bezüglich ihres Abstands gegeneinander verstellbar. Eine seitliche Verschiebung von Linse uns Sendeelement gegeneinander wird durch die Positionierelemente sicher verhindert.

Die Positionierelemente können dabei beispielsweise Zapfen umfassen, die in beispielsweise in der Blattfeder des Blattfederdrehgelenkes vorgesehene Öffnungen spielfrei eingreifen. Es können jedoch auch sonstige Positionierelemente vorgesehen sein, die die spielfreie Festlegung des Schwenkhebels bezüglich des Basisteils und insbesondere bezüglich des Blattfederdrehgelenkes in zumindest zwei Freiheitsgraden gewährleisten.

Weitere vorteilhafte Ausführungsformen der Erfindung sind in den Unteransprüchen angegeben.

Die Erfindung wird nachfolgend anhand eines Ausführungsbeispiels unter Bezugnahme auf die Zeichnung näher beschrieben; in dieser zeigen:
- Fig. 1: eine Seitenansicht einer erfindungsgemäß ausgebildeten Versteilvorrichtung im Teilschnitt,
- Fig. 2: eine Draufsicht auf die Vorrichtung gemäß Fig. 1 entlang des Pfeils A und
- Fig. 3: eine Seitenansicht der Vorrichtung gemäß Fig. 1 entlang des Pfeils B.

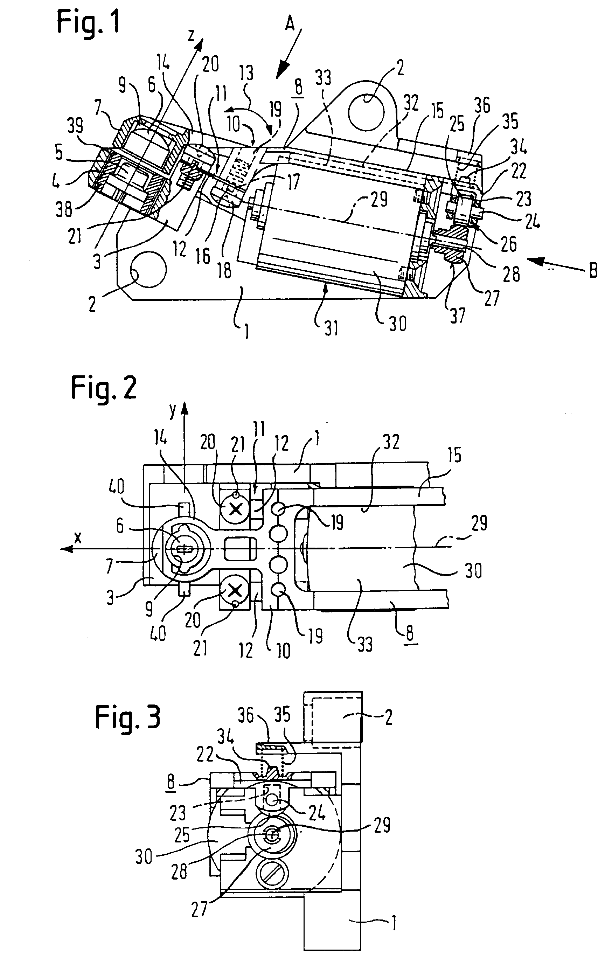

Die Verstellvorrichtung gemäß Fig. 1 umfaßt ein Basisteil 1 mit Öffnungen 2, über die sie beispielsweise mit dem Gehäuse einer optoelektronischen Vorrichtung verbunden werden kann.

An dem Basisteil 1 ist ein Ansatz 3 mit einer Bohrung 4 angeformt, in der eine Fassung 38 aufgenommen ist. In der Fassung 38 ist ein Sendeelement 5 in Form einer Diode angeordnet. An der Innenseite der Bohrung 4 sind in Längsrichtung der Bohrung 4 verlaufende, nach innen ragende Kufen 39 oder Stege ausgebildet, die beim Einschieben der Fassung 38 in die Bohrung 4 verformt werden bzw. sich in die Außenseite der Fassung 38 einschneiden. Durch die Kufen 39 ist somit ein drehfester Preßsitz der Fassung 38 in der Bohrung 4 bei gleichzeitiger Verschiebemöglichkeit in Längsrichtung der Bohrung 4 möglich.

Die Fassung 38 besitzt aus dem Ansatz 3 seitlich herausragende Zapfen 40, über die mit einem geeigneten Werkzeug die Fassung 38 entlang den Kufen 39 der Bohrung 4 verschoben werden kann. Über diese Verschiebung kann zunächst die "Fokusnullage" des Systems zu einer definierten Position des Schwenkhebels 8 eingestellt werden.

Dem Sendeelement 5 in Abstrahlrichtung gegenüberliegend ist eine Linse 6 vorgesehen, die im Bereich des freien Endes 7 eines Schwenkhebels 8 angeordnet ist. Der Schwenkhebel 8 besitzt an seinem freien Ende 7 eine Ausnehmung 9, in der die Linse 6 befestigt ist. Dabei erstreckt sich die Ausnehmung 9 vollständig durch das freie Ende des Schwenkhebels 8 hindurch, so daß von dem Sendeelement 5 ausgesandtes Licht entlang einer Achse z durch die Linse 6 und den Schwenkhebel 8 hindurch treten kann.

Der Schwenkhebel 8 ist in seinem Mittelbereich 10 über ein Drehgelenk 11 bildende Blattfedern 12 verbunden, so daß der Schwenkhebel 8 gegenüber dem Basisteil 1 entsprechend einem Pfeil 13 verschwenkbar ist.

Durch die schwenkbare Lagerung des Schwenkhebels 8 bildet dieser einen doppelarmigen Schwenkhebel mit einem ersten Arm 14, an dessen Ende die Linse 6 angeordnet ist, und mit einem zweiten Arm 15, der sich über das Drehgelenk 11 hinaus von dem ersten Arm 14 weg erstreckt.

An dem Mittelbereich 10 des Schwenkhebels 8 sind zwei als Zapfen 16 ausgebildete Positionierelemente ausgebildet, die in entsprechende Öffnungen 17 in den Blattfedern 12 spielfrei eingreifen. Durch diese spielfreie Verbindung ist lediglich eine Bewegung des Schwenkhebels 8 bezüglich den Blattfedern 12 in Richtung der z-Achse möglich, während die Bewegungen in den beiden übrigen Richtungen (x- und y-Richtung, siehe Fig. 2) verhindert wird.

Die Bewegung des Schwenkhebels 8 in z-Richtung wird durch Schrauben 18 verhindert, die durch die Blattfedern 12 hindurch in in dem Schwenkhebel 8 ausgebildete Gewindebohrungen 19 eingeschraubt sind. Anstelle von Schrauben 18 und Gewindebohrungen 19 können grundsätzlich sonstige geeignete Verbindungsmöglichkeiten, wie beispielsweise Nietverbindungen, Klebeverbindungen, Lötverbindungen, Schweißverbindungen oder dergleichen verwendet werden.

Die Blattfedern 12 sind mit dem Ansatz 3 des Basisteils 1 durch Schrauben 20 verbunden, wobei auch hier die Verbindung durch sonstige geeignete Verbindungsmittel, beispielsweise die soeben genannten Verbindungsmittel, vorgenommen sein kann.

Der Ansatz 3 weist ebenfalls als Zapfen ausgebildete Positionierelemente 21 auf, die in entsprechend ausgebildete Öffnungen in den Blattfedern 12 eingreifen und somit eine eindeutige Positionierung zwischen den Blattfedern 12 und dem Ansatz 3 festlegen.

An dem freien Ende 22 des anderen Arms 15 des doppelarmigen Schwenkhebels 8 ist eine Ausnehmung 23 ausgebildet, in der ein über einen Stift 24 mit dem Arm 15 des Schwenkhebels 8 drehbar verbundenes Kugellager 25 angeordnet ist.

Das Kugellager 25 bildet einen Angriffsabschnitt 26 für einen Exzenter 27, der an dem freien Ende 28 einer Drehachse 29 eines elektrischen Motors 30 angeordnet, insbesondere auf diese aufgepreßt ist. Der Exzenter 27 besitzt eine ballige Außenfläche 37, so daß bei einer Verschwenkung des Schwenkhebels 8 um das Drehgelenk 11 das Kugellager 25 auf der balligen Außenfläche 37 des Exzenters 27 abrollt.

Der Motor 30 bildet zusammen mit dem Exzenter 27 ein Stellelement 31 für den Schwenkhebel 8, über das der Schwenkhebel 8 um das Drehgelenk 11 verschwenkt werden kann.

Der Exzenter 27 und der Motor 30 erstrecken sich von dem Angriffsabschnitt 26 des Arms 15 des Schwenkhebels 8 in Richtung zu dessen Arm 14, wobei die Drehachse 29 des Motors 30 im wesentlichen parallel zur Längserstreckung des Schwenkhebels 8 verläuft.

In dem Arm 15 des Schwenkhebels 8 ist eine insbesondere zur Drehachse 29 symmetrisch ausgebildete Öffnung 32 ausgebildet, in die sich ein Teil 33 des Motors 30 hinein erstreckt.

Auf der der Ausnehmung 23 gegehüberliegenden Seite des Arms 15 des Schwenkhebels 8 ist eine als Zapfen 34 ausgebildete Führung für eine als Schraubenfeder ausgebildete Druckfeder 35 vorgesehen, die unter Spannung zwischen dem Arm 15 des Schwenkhebels 8 und einem Vorsprung 36 des Basisteils 1 angeordnet ist, so daß der Arm 15 aufgrund der Federkraft von dem Vorsprung 36 weggedrückt wird. Anstelle einer Schraubenfeder kann auch eine sonstige geeignete Form für die Feder 35 gewählt werden. Weiterhin kann die Feder 35 grundsätzlich auch als Zugfeder ausgebildet sein und in diesem Fall beispielsweise auf der Seite der Ausnehmung 23 an dem Arm 15 befestigt sein. Anstelle an dem Arm 15 des Schwenkhebels 8 kann die Feder 35 in analoger Weise auch an dem Arm 14 des Schwenkhebels 8 angreifen

Aus Fig. 2 ist zu erkennen, daß das Gehäuse des Motors 30 zylinderförmig ausgebildet ist und sich der in Richtung des Schwenkhebels 8 erstreckende Bereich 33 des zylinderförmigen Gehäuses in die Öffnung 32 hinein erstreckt.

Weiterhin ist aus Fig. 2 zu erkennen, daß das Drehgelenk 11 durch zwei Blattfedern 12 gebildet wird. Grundsätzlich istjedoch auch möglich, die beiden Blattfedern 12 zu einer einzigen Blattfeder zusammenzufassen, die sich über einen Teil oder die gesamte Breite des Schwenkhebels 8 erstreckt.

Aus Fig. 3 ist zu erkennen, daß die Druckfeder 35, der die Drehachse für das Kugellager 25 bildende Stift 24 sowie die Drehachse 29 des Motors 30 in einer Ebene übereinander angeordnet sind, so daß die bei einer Verschwenkung des Schwenkhebels 8 durch den Exzenter 27 erzeugten Kräfte innerhalb dieser Ebene liegen. Eine ungleichmäßige Belastung bzw. ein Verklemmen der Vorrichtung wird dadurch zuverlässig verhindert.

Bei einer Betätigung des Motors 30 wird der Exzenter 27 um die Drehachse 29 des Motors 30 verdreht, wodurch der Arm 15 des Schwenkhebels 8 entgegen der Spannung der Druckfeder 35 in Richtung des Vorsprungs 36 verschoben wird. Die dabei entstehende Reibung wird durch das Kugellager 25 verringert.

Durch die Bewegung des Arms 15 erfolgt eine Verschwenkung des Schwenkhebels 8 um das Drehgelenk 11, so daß der Arm 14 zusammen mit der Linse 6 in Richtung des Sendeelements 5 bewegt wird.

Bei einer weiteren Verdrehung des Exzenters 27 bewegt sich der Arm 15 aufgrund der Spannung der Druckfeder 35 von dem Vorsprung 36 weg, so daß eine entgegengesetzte Verschwenkung des Schwenkhebels 8 erfolgt, wodurch der Abstand zwischen der Linse 6 und dem Sendeelement 5 vergrößert wird.

Auf diese Weise ist durch Betätigen des Motors 30 der Abstand zwischen dem Sendeelement 5 und der Linse 6 und damit die Fokuslage einer mit der erfindungsgemäß ausgebildeten Verstellvorrichtung versehenen optoelektronischen Vorrichtung einstellbar.

### Bezugszeichenliste

- 1: Basisteil
- 2: Öffnungen
- 3: Ansatz
- 4: Bohrung
- 5: Sendeelement
- 6: Linse
- 7: freies Ende des Schwenkhebels
- 8: Schwenkhebel
- 9: Ausnehmung
- 10: Mittelbereich des Schwenkhebels
- 11: Drehgelenk
- 12: Blattfeder
- 13: Pfeil
- 14: erster Arm des Schwenkhebels
- 15: anderer Arm des Schwenkhebels
- 16: Positionierelemente
- 17: Öffnungen
- 18: Schrauben
- 19: Gewindebohrungen
- 20: Schrauben
- 21: Positionierelemente
- 22: freies Ende des Armes 15
- 23: Ausnehmung
- 24: Stift
- 25: Kugellager
- 26: Angriffsabschnitt
- 27: Exzenter
- 28: freies Ende der Motorachse
- 29: Drehachse
- 30: Motor
- 31: Stellelement
- 32: Öffnung
- 33: Teil des Motors
- 34: Zapfen
- 35: Druckfeder
- 36: Vorsprung
- 37: ballige Außenfläche
- 38: Fassung
- 39: Kufen
- 40: Zapfen

## Patentansprüche

1. Vorrichtung zum Verstellen der Fokuslage einer ein Licht aussendendes Sendeelement (5) und eine Linse (6) zum Fokussieren des von dem Sendeelement (5) ausgesandten Lichts umfassenden optoelektronischen Vorrichtung mit einem Schwenkhebel (8) zur Aufnahme des Sendeelements (5) oder der Linse (6), wobei der Schwenkhebel (8) als doppelarmiger Schwenkhebel (8) ausgebildet und über ein Stellelement (31) zum Verstellen des Abstandes zwischen dem Sendeelement (5) und der Linse (6) und damit zum Einstellen der Fokuslage um ein Drehgelenk (11) verschwenkbar ist, der eine Arm (14) des Schwenkhebels (8) zur Aufnahme der Linse (6) oder des Sendeelements (5) ausgebildet ist und das Stellelement (31) an einem Angriffsabschnitt (26) des auf der anderen Seite des Drehgelenks (11) liegenden, anderen Arm (15) des Schwenkhebels (8) angreift.

2. Vorrichtung zum Verstellen der Fokuslage einer ein Licht aussendendes Sendeelement (5) und eine Linse (6) zum Fokussieren des von dem Sendeelement (5) ausgesandten Lichts umfassenden optoelektronischen Vorrichtung mit einem Schwenkhebel (8) zur Aufnahme des Sendeelements (5) oder der Linse (6), wobei der Schwenkhebel (8) über ein Stellelement (31) zum Verstellen des Abstandes zwischen dem Sendeelement (5) und der Linse (6) und damit zum Einstellen der Fokuslage um ein Drehgelenk (11) verschwenkbar ist und sich das Stellelement (31) entlang der Längsausdehnung des Schwenkhebels (8) erstreckt.

3. Vorrichtung nach Anspruch 1,
**dadurch gekennzeichnet,**
daß sich das Stellelement (31) von dem an dem Arm (15) des Schwenkhebels (8) angeordneten Angriffsabschnitt (26) in Richtung zu dem anderen Arm (14) des Schwenkhebels (8) hin erstreckt.

4. Vorrichtung nach einem der vorhergehenden Ansprüche,
**dadurch gekennzeichnet,**
daß der Schwenkhebel (8) eine Ausnehmung (32), insbesondere eine Durchbrechung aufweist und daß sich ein Teil (33) des Stellelements (31) in die Ausnehmung (32) hinein erstreckt.

5. Vorrichtung nach einem der vorhergehenden Ansprüche,
**dadurch gekennzeichnet,**
daß das Stellelement (31) über einen Exzenter (27) an dem Schwenkhebel (8) angreift.

6. Vorrichtung nach einem der vorhergehenden Ansprüche,
**dadurch gekennzeichnet,**
daß das Stellelement (31) als insbesondere elektrischer Motor (30) ausgebildet ist.

7. Vorrichtung nach Anspruch 6,
**dadurch gekennzeichnet,**
daß die Drehachse (29) des Motors (30) im wesentlichen parallel zur Längserstreckung des Schwenkhebels (8) verläuft.

8. Vorrichtung nach einem der vorhergehenden Ansprüche,
**dadurch gekennzeichnet,**
daß das Drehgelenk (11) als Blattfederdrehgelenk ausgebildet ist.

9. Vorrichtung nach einem der vorhergehenden Ansprüche,
**dadurch gekennzeichnet,**
daß das Drehgelenk (11) an einem Basisteil (1) vorgesehen ist und daß an dem Schwenkhebel (8) Positionierelemente (16) zum eindeutigen Festlegen des Schwenkhebels (8) bezüglich des Basisteils (1) in zumindest zwei Freiheitsgraden ausgebildet sind.

10. Vorrichtung nach einem der vorhergehenden Ansprüche,
**dadurch gekennzeichnet,**
daß der Schwenkhebel (8) zur Aufnahme der Linse (6) und das Basisteil (1) zur Aufnahme des Sendeelements (5) oder daß der Schwenkhebel (8) zur Aufnahme des Sendeelements (5) und das Basisteil (1) zur Aufnahme der Linse (6) ausgebildet sind.

11. Optoelektronische Vorrichtung mit einem Licht aussendenden Sendeelement (5), einer Linse (6) zum Fokussieren des von dem Sendeelement (5) ausgesandten Lichts und einer Vorrichtung nach einem der vorhergehenden Ansprüche, bei der die Linse (6) oder das Sendeelement (5) an dem Schwenkhebel (8) angeordnet ist.

12. Vorrichtung nach Anspruch 11,
**dadurch gekennzeichnet,**
daß die Linse (6) an dem Schwenkhebel (8) und das Sendeelement (5) an dem Basisteil (1) oder daß die Linse (6) an dem Basisteil (1) und das Sendeelement (5) an dem Schwenkhebel (8) angeordnet sind.
